# EUROPÄISCHE PATENTANMELDUNG

(11) **EP 1 027 981 A2**
(43) Veröffentlichungstag der Anmeldung: **16.08.2000**
(21) Anmeldenummer: 00101558.5
(22) Anmeldetag: 27.01.2000
(51) Int. Cl.: B29C 65/74, B65B 51/18

(54) **Verschweisseinrichtung für verschweissbare Folien**

(30) Priorität: 11.02.1999 DE 19905888
(71) Anmelder: KALLFASS VERPACKUNGSMASCHINEN GmbH & Co., D-72622 Nürtingen-Zizishausen (DE)
(72) Erfinder: Kallfass, Karl-Heinz, 72622 Nürtingen (DE)
(74) Vertreter: Patentanwälte Ruff, Beier, Schöndorf und Mütschele

(57) **Zusammenfassung**

Durch die Erfindung wird eine Verschweißeinrichtung (20) als Teil einer Verpackungsmaschine (11) für Gegenstände (12) in eine durchlaufende Folie (21, 22) in Form eines Längsschlauches (13) geschaffen. Die wenigstens zwei Folienlagen (21, 22) werden an einer Längsseite durch die Verschweißeinrichtung (20) verschweißt. Die Verschweißeinrichtung (20) weist ein rotierendes, beheiztes Trenn-Schweißrad (17) zum Verschweißen der Folienlagen (21, 22) und zum Abtrennen eines Überstandes (23) der Folie auf sowie wenigstens ein an dem Trenn-Schweißrad (17) anliegendes mitlaufendes Gegenrad (18). Während das Trenn-Schweißrad (17) in dem Berührungsbereich (32) an dem Gegenrad (18) hart bzw. starr ausgebildet ist, insbesondere aus Stahl, ist das Gegenrad (18) in diesem Bereich teilflexibel. Die Teilflexibilität des Gegenrades kann durch einen äußeren Ring (40) aus einem Fluorelastomer passender Härte bestehen, die beispielsweise bei ca. 75 Shore liegen kann. Das Axialprofil des Trenn-Schweißrades (17) kann die Form einer geschweiften Klammer mit einem abstehenden Vorsprung (37) in der Mitte haben, wobei der umlaufende Vorsprung (37) das Durchtrennen der Folienlagen (21, 22) bewirkt.

## Beschreibung

### ANWENDUNGSGEBIET UND STAND DER TECHNIK

Die Erfindung betrifft eine Verschweißeinrichtung, insbesondere als Teil einer Verpackungsmaschine zum Verpacken von Gegenständen, für eine durchlaufende Verpackungs-Folie, die etwa in Form wenigstens eines Längsschlauches Gegenstände im wesentlichen überragt und/oder umhüllt und an einer Längsseite in einem mehrlagigen Bereich durch die Verschweißeinrichtung verschweißbar ist. Dabei weist die Verschweißeinrichtung ein rotierendes, beheizbares Trenn-Schweißrad zum Verschweißen der Folienlagen und zum Abtrennen eines Überstandes der Folie auf sowie wenigstens ein an dem Trenn-Schweißrad anliegendes mitlaufendes Gegenrad.

Eine Einrichtung dieser Art geht beispielsweise aus der US-PS 5 282 349 hervor. Dort wird eine an einer Seite offene Folien-Schlauchbahn über zu verpackende Gegenstände geführt und mit einer sog. "Seitenschweißeinrichtung" zusammengeschweißt. Das Zusammenschweißen erfolgt thermisch durch Erhitzen der Folie, wobei diese durch zwei aufeinander abrollende Räder, ein beheiztes Schweißrad und ein anliegendes Gegenrad, geführt wird. Danach wird auf nicht näher beschriebene Weise der Überstand abgetrennt. Für dieses Abtrennen sind verschiedene Methoden entwickelt worden, unter anderem mittels feststehender Klingeneinrichtungen, drehenden Messerrädern oder dergleichen.

### AUFGABE UND LÖSUNG

Es ist Aufgabe der Erfindung, eine Verschweißeinrichtung der vorgenannten Art zu schaffen, bei der ein kombinierter Trenn-Schweißvorgang von Folienlagen an einem Räderpaar bei hohen Standzeiten der Einrichtung verbessert wird.

Diese Aufgabe wird durch die Merkmale des Anspruchs 1 gelöst. Weitere Ausführungen der Erfindung sind Gegenstand der Unteransprüche. Erfindungsgemäss ist das Trenn-Schweißrad in dem Bereich der Anlage an dem Gegenrad hart bzw. starr und das Gegenrad in diesem Bereich teilflexibel. Auf diese Weise ist es möglich, durch bestimmte Profilausbildungen des Trenn-Schweißrades, an die sich das Gegenrad aufgrund seiner Teilflexibilität anpassen kann, das Verschweißen und/oder das Durchtrennen der Folienlagen zu verbessern. Der teilflexible Bereich des Gegenrades ist bevorzugt mindestens so breit wie der Anlagebereich des Gegenrades an dem Trenn-Schweißrad, insbesondere erstreckt er sich axial über die gesamte Breite des Gegenrades.

Die Teilflexibilität des Gegenrades kann durch zumindest teilweise Verwendung eines teilflexiblen Materials erzielt werden. Vorteilhaft sind fluorhaltige Materialien, wie Fluorelastomere o.dgl., die aus der Gruppe der Kunstharze stammen und eine vulkanisierbare Gummiart sind, welche sich elastisch vernetzt. Vorteilhaft ist das teilflexible Material eine Auflage mit einer für die gewünschte Teilflexibilität ausreichendenden Dicke auf dem Gegenrad. Ein bevorzugter Schichtdickenbereich liegt in etwa zwischen 1 mm und 10 mm, als vorteilhaft werden ca. 5 mm angesehen. Der Kern des Gegenrades kann dabei metallisch sein, um eine ausreichende mechanische Stabilität zu gewährleisten. Gemäß einer weiteren Ausführungsmöglichkeit kann das Gegenrad an seinem Außenumfang wenigstens ein Rundband aus teilflexiblem Material aufweisen, insbesondere mit einen im wesentlichen rechteckigen Querschnitt. Eine bevorzugte Härte des teilflexiblen Materials liegt im Bereich zwischen 50 Shore und 150 Shore, als vorteilhaft wird eine Härte von ca. 75 Shore angesehen. Als Alternative zu einem homogenen Material mit gleicher Härte kann in axialer Richtung schichtweise unterschiedlich hartes Material verwendet werden.

Das Trenn-Schweißrad kann im wesentlichen aus Metall gefertigt sein, vorzugsweise aus Stahl. Besonders bevorzugt wird hierbei ein Chromstahl. Alternative Möglichkeiten bestehen darin, es zumindest teilweise aus Aluminium zu fertigen, insbesondere mit einem Aluminiumkern, da aufgrund der sehr guten Wärmeleitfähigkeit von Aluminium eine gleichmäßigere Beheizung des Trenn-Schweißrades erreicht werden kann. Bevorzugt ist das Trenn-Schweißrad einteilig ausgebildet, besonders bevorzugt einstückig bzw. "aus einem Guß". Eine Einstückigkeit ist sowohl für die mechanische Festigkeit als auch für eine Wärmeverteilung vorteilhaft. Des weiteren ist es vorzugsweise im wesentlichen massiv ausgebildet.

Das Trenn-Schweißrad kann zumindest teilweise im Bereich der Anlage an einem Gegenrad eine Beschichtung, insbesondere gegen Haften der Folie, aufweisen. Eine solche Beschichtung ist vorzugsweise sehr dünn. Als Materialien werden fluorhaltige Materialien bevorzugt, beispielsweise PTFE. Die Beschichtung kann bei bestimmten Folienarten, beispielsweise bei Polyethylen, ein Probleme hervorrufendes Haftenbleiben an dem Trenn-Schweißrad verhindern.

Das Trennen der Folienlagen mittels des Trenn-Schweißrades kann bevorzugt durch eine spezielle Ausbildung des Axialprofils seines Außenumfanges erreicht werden. Vorteilhaft weist dieses einen Trennbereich mit einem umlaufenden Vorsprung auf, der insbesondere im wesentlichen spitz ist. Des weiteren kann wenigstens ein Schweißbereich, insbesondere seitlich versetzt dazu, vorgesehen sein. Der Schweißbereich ist vorzugsweise breit im Vergleich zu dem Vorsprung, insbesondere grenzt er direkt an den Trennbereich bzw. Vorsprung an. Vorteilhaft sind sowohl der Trennbereich als auch der Schweißbereich beheizt; bei dem Trennbereich läßt sich dadurch der Trennvorgang bzw. das Trennergebnis verbessern. Beim Trennvorgang drückt sich der Vorsprung in den teilflexiblen Bereich des Gegenrades ein, wobei die dazwischenliegenden Folienlagen mitgenommen und zwischen dem Vorsprung und dem Gegenrad durchgetrennt werden. Vorteilhaft dringt der Vorsprung so weit in das Gegenrad ein, daß benachbarte Schweißbereiche des Trenn-Schweißrades ebenfalls an dem Gegenrad anliegen. Ein Vorteil gegenüber Rundscheiben-Scherenmessern o.dgl. besteht darin, daß keine metallischen Teile aneinander abrollen bzw. gegeneinander geschert werden. Das teilflexible Material wird durch den Vorsprung eingedrückt, aufgrund seiner inhärenten, nicht zu geringen Härte bietet es dabei jedoch genügend Druckwiderstand, um dazwischenliegende Folienlagen zu durchtrennen. Versuche haben gezeigt, daß die "Schneidleistung" einer solchen Einrichtung sehr gut ist.

Eine bevorzugte Profilform für den Vorsprung des wenigstens einen Trennbereiches ist eine Dreiecksform, insbesondere eine gleichschenklige Dreiecksform. Der Winkel an der abstehenden Spitze des Dreiecks liegt vorzugsweise im Berich zwischen 25° und 90°, insbesondere bei knapp 40°. Die Spitze des Vorsprunges muß nicht messerscharf sein, sie kann evtl. leicht abgerundet sein.

Bei einer bevorzugten Ausgestaltung der Erfindung ist zu beiden Seiten des Trennbereiches bzw. Vorsprunges ein Schweißbereich angeordnet, insbesondere direkt daran angrenzend. Bevorzugt ist das Axialprofil des Trenn-Schweißrades im wesentlichen symmetrisch zu dem Vorsprung des Trennbereiches. Die Schweißbereiche verlaufen vorteilhaft parallel zur Drehachse des Rades, also im wesentlichen in einer Linie. Ein Schweißbereich kann etwa drei- bis zehnmal so breit sein wie ein Trennbereich. Als weitere Möglichkeit kann das Axialprofil des Gegenrades, insbesondere des teilflexiblen Bereiches, im wesentlichen als Negativform des Axialprofils des Trenn-Schweißrades ausgebildet sein. So kann ein zumindest teilweises Abscheren der Folienlagen zwischen den beiden Rädern erreicht werden.

Eine Möglichkeit der Beheizung des Trenn-Schweißrades ist eine integrierte elektrische Heizung, wobei aufgrund der Rotation des Rades Schleifkontakte für die Stromführung vorgesehen werden müssen. Bevorzugt ist dem Trenn-Schweißrad eine externe Heizeinrichtung als Beheizung zugeordnet, die insbesondere feststehend ist, wodurch ein elektrischer Anschluß einfach möglich ist. Vorzugsweise wird nur ein Bereich des Trenn-Schweißrades beheizt, insbesondere eine Seite. Dazu kann die Heizeinrichtung in geringem Abstand zu einer Seitenflanke angeordnet sein, um eine möglichst gute Wärmeübertragung durch Konvektion und/oder Wärmestrahlung zu erreichen. Bei entsprechenden Oberflächen, z.B. der vorgenannten haftvermindernden bzw. gleitfördernden Beschichtung, ist es auch möglich, das Trennschweißrad in Kontakt oder Fast-Kontakt zur Heizeinrichtung laufen zu lassen, was die Wärmeübertragung weiter verbessern würde. Vorteilhaft wird zumindest ein radial äußerer Bereich des Trenn-Schweißrades beheizt, der insbesondere nahe des Bereiches der Anlage an dem Gegenrad, also im Trenn- und Schweißbereich, liegen kann. Die Heizeinrichtung kann zumindest teilweise in Umfangsrichtung verlaufen, insbesondere um eine in Umfangsrichtung gleichmäßige Beheizung zu erreichen.

Bevorzugt ist die Heizeinrichtung elektrisch und weist wenigstens einen länglichen Heizkörper auf, der als Widerstandsheizung insbesondere parallel zur Lauf ebene des Trenn-Schweißrades spiralförmig ausgebildet ist. Eine flächige Beheizung der Seite des Trenn-Schweißrades bewirkt eine im wesentlichen gleichmäßige, vorteilhafte Erwärmung des Trenn-Schweißrades auf eine gewünschte Temperatur. Alternative Beheizungen sind durch IR-Strahler möglich, ebenso kann eine Induktionsheizung zum Einsatz kommen.

Für eine Vielzahl von auf diesem Gebiet verwendeten Folien, wie beispielsweise Polyolefine-Folien oder PE-Folien, wird eine Temperatur im Bereich von ca. 120°C bis 250°C als vorteilhaft angesehen. Abhängig von dem Druck, mit dem die Folienlagen beim Verschweißen zusammengedrückt werden, variiert die notwendige Temperatur beispielsweise im Bereich von 165°C bis 175°C. Um die Temperatur in einem gewünschten Bereich zu halten, können Temperatursensoren vorgesehen sein, beispielsweise feststehend im Bereich der Heizeinrichtung. Eine Möglichkeit ist ein IR-Temperatursensor, der die Temperatur der Heizeinrichtung oder des Trenn-Schweißrades direkt erfassen kann. Eine Steuerung der Beheizung wird vorteilhaft über die Steuerung der Verpackungsanlage vorgenommen, bevorzugt werden SPS-Steuerungen.

In weiterer Ausgestaltung der Erfindung kann die Verschweißeinrichtung eine Transporteinrichtung für die Folie aufweisen, welche die Folienlagen zumindest vor und/oder hinter dem Trenn-Schweißrad führt und/oder erfaßt, insbesondere auch im Bereich des Abtrennens. Dadurch kann vor allem in dem relevanten Bereich die Folie geführt werden und das Trennergebnis verbessert werden. Vorteilhaft können umlaufende Führungsmittel vorgesehen sein, insbesondere mehrere Räder in Reihe oder wenigstens zwei Riemen, die als Riemenpaar aneinander anliegend umlaufen und die Folie durch Einklemmen erfassen. Die Riemen können zumindest über eine längere Strecke anliegend verlaufen, wobei sie beispielsweise zusätzlich durch Schuhe o. dgl. angedrückt werden. In weiterer Ausgestaltung können wenigstens zwei Riemenpaare nebeneinander verlaufen, wobei sie vorzugsweise jeweils an einer Seite der Verlängerung der Abtrennung verlaufen. Um mit der Verschweißeinrichtung bzw. der Verschweißung der Folienlagen möglichst nahe an den zu verpackenden Gegenstand zu kommen, kann das an dieser Seite verlaufende Riemenpaar schmäler ausgeführt sein als das andere.

Da es, insbesondere bei voluminösen zu verpackenden Gegenständen, möglich sein kann, daß die aufeinander liegenden Folienlagen nicht ausreichend plan bzw. faltig oder verworfen sind, ist bevorzugt eine Andrückeinrichtung zum Zusammendrükken der Folienlagen vorgesehen. Vorzugsweise ist sie zumindest im Bereich des Verschweißens der Folienlagen angeordnet, insbesondere in Transportrichtung beidseitig davon. Die Andrückeinrichtung kann sich in weiterer Ausgestaltung über einen längeren Bereich erstrecken, insbesondere von dem Bereich des Verschweißens ausgehend sowie evtl. ein Stück davor. Bevorzugt gleitet die Folie nicht an der Andrückeinrichtung entlang, sondern wird durch Abrollen oder eine sich zumindest teilweise bewegende Andrückeinrichtung zusammengedrückt. Gemäß einer Möglichkeit können wenigstens zwei aufeinander abrollende Räder, insbesondere als längliche Rollenbahn, vorgesehen sein. In weiterer Ausgestaltung können die Rollenbahnen durch länglich verlaufende Riemen ersetzt werden, insbesondere aufeinander ablaufende, zusammengedrückte Riemen. Möglich ist eine Kombination einer o.g. Transporteinrichtung und einer Andrückeinrichtung, bevorzugt durch aufeinander ablaufende Riemenpaare.

Es wird als vorteilhaft angesehen, die Folienlagen mit der Verschweißeinrichtung möglichst nahe an dem zu verpackenden Gegenstand zu verbinden. Zu diesem Zweck ist es möglich, das Trenn-Schweißrad und/oder das Gegenrad an der von dem zu verpackenden Gegenstand abgewandten Seite nach Art auskragender Räder zu lagern. Weiters können weitere Funktionseinheiten, beispielsweise Transport- und/oder Andrückeinrichtungen, ebenfalls nur einseitig gelagert werden und die Ebene des Trenn-Schweißrades nur ein geringes Stück überragen. Als eine derartige Funktionseinrichtung kann eine Beheizung des Trenn-Schweißrades lediglich von der Seite der Lagerung aus erfolgen. Dabei ist zu beachten, daß die Wärmedurchdringung des Trenn-Schweißrades dergestalt ausgewählt ist, daß auf der zu dem Gegenstand gewandten Seite des Rades die gewünschte Verschweißtemperatur vorliegt, da in diesem Bereich die relevante Schweißnaht erzeugt wird.

Teile bzw. Bereiche der Verschweißeinrichtung können von der Folie abhebbar ausgestaltet sein, insbesondere das Trenn-Schweißrad. Bei einem Stillstand der Anlage kann dann dieses Rad von der Folie abgehoben werden, um ein Auf- und evtl. Durchschmelzen der Folie zu vermeiden. Ein Abheben des Trenn-Schweißrades kann vorteilhaft unabhängig von dem Gegenrad und/oder einer Transport- bzw. Andrückeinrichtung für die Folie erfolgen. Weiters ist es wünschenswert, die Folie aus der Verschweißeinrichtung entnehmen zu können, beispielsweise um sie auszuwechseln oder eine neue Folie einzulegen. Dazu kann es ausreichend sein, eine Hälfte der Verschweißeinrichtung abzuheben, insbesondere eine Transport- bzw. Andrückeinrichtung.
Alternativ können das Trenn-Schweißrad und das Gegenrad fest montiert sein, insbesondere sogar auf einer Grundplatte. Dadurch ist eine präzise Ausrichtung bei vereinfachter Mechanik erreichbar.

In Transportrichtung nach dem Bereich des Abtrennens des Überstandes der Folie ist bevorzugt eine Separiereinrichtung für den Überstand angeordnet um zu vermeiden, daß dieser nachträglich über die Trennung hinweg wieder zusammenhaftet bzw. ungewollt in nachfolgende Verarbeitungsschritte mit eingeführt wird. Die Separiereinrichtung ist vorzugsweise in Verlängerung des Abtrennens angeordnet und kann keilförmig, insbesondere als Klinge, ausgebildet sein.

Eine Verbesserung des Verschweißens der Folienlagen miteinander kann dadurch erreicht werden, daß das Trenn-Schweißrad mit Druck an dem Gegenrad anliegt. Die durch Hitzeeinwirkung angeschmolzenen Folienlagen werden so stark zusammengepreßt, daß eine ausreichende Haftung, evtl. eine Materialvermengung, erfolgt. Der Druck kann in einem Bereich zwischen 10 N/mm² und 50 N/mm² liegen, bezogen auf die Breite des Axialprofils der Räder, vorteilhaft beträgt er ca. 30 N/mm². Dieser Anpreßdruck kann durch kontrolliert gespannte Federn erzeugt werden, vorteilhaft kann ein Elektromagnet verwendet werden. Dieser drückt gegen eine mechanische Feder, die als Anschlag-Begrenzung dient. Möglich ist alternativ eine Pneumatik.

Um ein Verschieben der Folienlagen gegeneinander zu vermeiden, können das Trenn-Schweißrad und das Gegenrad bevorzugt synchron angetrieben sein, wobei sie vorteilhaft miteinander gekoppelte Antriebe aufweisen. Eine Möglichkeit ist ein Antrieb für beide Räder, eine Übertragung sollte dabei möglichst schlupffrei stattfinden, beispielsweise über Zahnräder oder -riemen. Mit einem solchen Zentralantrieb können vorzugsweise weitere fortlaufend bewegte Funktionseinheiten wie Transport- und/oder Andrückeinrichtungen angetrieben werden.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränkt die unter diesen gemachten Aussagen nicht in ihrer Allgemeingültigkeit.

### KURZBESCHREIBUNG DER ZEICHNUNGEN

Ein Ausführungsbeispiel der Erfindung ist in den Zeichnungen dargestellt und wird im folgenden näher erläutert. In den Zeichnungen zeigen:
- Fig. 1: schematische Anordnung einer Verschweißeinrichtung einer Verpackungsanlage,
- Fig. 2: Seitenansicht der Verschweißeinrichtung,
- Fig. 3: Profile des Trenn-Schweißrades und gegenüberliegenden Gegenrades im abgehobenen Zustand,
- Fig. 4: die Profile der Räder aus Fig. 3 im angedrückten Zustand und
- Fig. 5: die einseitige Lagerung des Trenn-Schweißrades samt feststehender Beheizung.

### DETAILLIERTE BESCHREIBUNG DES AUSFÜHRUNGSBEISPIELS

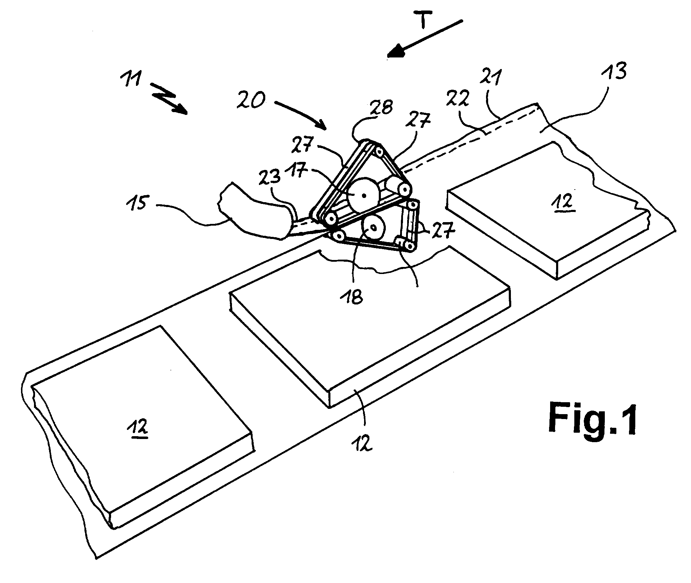

Die Fig. 1 ist sehr schematisch gehalten und zeigt nur ungefähr das Zusammenwirken einer erfindungsgemäßen Verschweißeinrichtung 20 mit einer Verpackungsmaschine 11, die nur zu einem kleinen Teil dargestellt ist. Auf einer nicht dargestellten bekannten Bahn laufen Gegenstände 12, die eine flache Quaderform aufweisen, in Transportrichtung T in einem Folienschlauch 13. Der Folienschlauch 13 ist an seiner vorne liegenden Längskante geschlossen, an seiner anderen Längskante dagegen offen und muß hier noch durch die Verschweißeinrichtung 20 verschlossen werden. Man kann die beiden Kanten der oberen Folienlage 21 und der unteren, gestrichelt dargestellten Folienlage 22 erkennen. Wie die Gegenstände 12 in den Folienschlauch 13 gelangen ist bekannter Stand der Technik. Die Folie 13 kann auch an beiden Längskanten offen sein, wobei dann zwei Verschweißeinrichtungen 20 erforderlich sind.

Die Verschweißeinrichtung 20 weist zwei umlaufende, hier dreieckförmig geführte, Riemenpaare auf, die aus einem vorderen schmalen Riemen 27 und einem hinteren breiten Riemen 27 bestehen. Die Riemenpaare sind symmetrisch zu der Ebene der Folie 13 angeordnet. Die Riemen 27 sind jeweils paarweise über Umlenkrollen 28 geführt, die einen nicht dargestellten Antrieb aufweisen. In dem Dreieck läuft ein Trenn-Schweißrad 17 auf der Ebene der Folie 13 zwischen dem schmalen und dem breiten Riemen 27. Es liegt an einem Gegenrad 18 an, das unter der Folie 13 gelagert ist. Beide Räder 17 und 18 sind jeweils angetrieben, vorteilhaft synchron. In dem Bereich ihrer Anlage aneinander werden die beiden Folienlagen 21 und 22 miteinander verbunden sowie der Überstand 23 abgetrennt. Der Überstand 23 wird von einer Abführeinrichtung 15 aufgenommen und abtransportiert.

Zwischen den Gegenständen 12 wird der Folienschlauch 13 ebenfalls verschlossen und durchtrennt. Da dies jedoch nicht Gegenstand dieser Anmeldung und aus dem Stand der Technik bekannt ist, wird an dieser Stelle nicht weiter darauf eingegangen. Als Möglichkeit soll hier lediglich eine den Folienschlauch quer durchtrennende Rahmenschweißeinrichtung genannt werden, die vorzugsweise in Transportrichtung T vor der Verschweißeinrichtung 20 angebracht ist. In einem solchen Fall kommt der Folienschlauch 13 mit den Gegenständen 12 schon abgelängt an der Verschweißeinrichtung 20 an, um seitlich verschlossen zu werden.

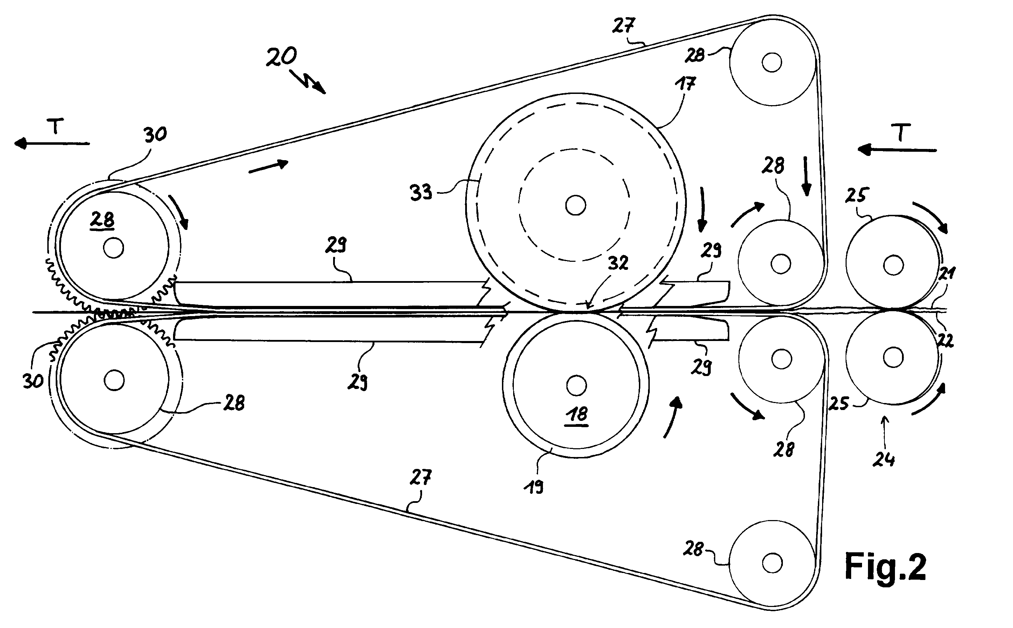

Die Fig. 2 zeigt eine Verschweißeinrichtung 20, wie sie von einem zu verpackenden Gegenstand aus gesehen wird. Dabei ist zu beachten, daß verschiedene Funktionseinrichtungen in verschiedenen, zu der Zeichenebene parallelen Ebene liegen bzw. verlaufen.

Die beiden Folienlagen 21 und 22 werden von rechts kommend in Transportrichtung T von der Vorspanneinrichtung 24 aufgenommen. Die Vorspanneinrichtung 24 besteht aus einem oberen und unteren Vorspannrad 25, die aneinander anliegend umlaufen. Dabei verläuft ihre Rotationsebene senkrecht zur Folienebene und schräg zur Zeichenebene bzw. Transportrichtung, wie zu erkennen ist, wobei die Räder 25 in Transportrichtung von dem Gegenstand wegweisen. Der Anstellwinkel kann in einem Bereich von 2° bis 20° liegen, vorzugsweise bei ca. 15°.

Hinter der Vorspanneinrichtung 24 werden die beiden Folienlagen 21 und 22 zwischen die beiden Riemen 27 genommen, die um die Umlenkrollen 28 gespannt umlaufen. Die Riemen 27 werden durch die zwischen den jeweils benachbarten Paaren von Umlenkrollen 28 liegenden Andrückschienen 29 daran vorbeigleitend zusammengedrückt, ebenso die von ihnen erfaßten und eingezogenen Folienlagen 21 und 22. Die Andrückschienen 29 können durch nicht dargestellte, evtl. elastisch Druck ausübende, Halterungen gegeneinander gedrückt werden. Ein Variieren des Anpreßdrucks kann eine Einstellung auf verschiedene Folienarten bzw. -dicken ermöglichen. Bei einer Verwendung von zwei in parallelen Ebenen verlaufenden Riemenpaaren 27 sind zugehörige Andrückschienen 29 vorteilhaft. Eine Synchronisierung der Riemen 27 erfolgt durch gekoppelte Zahnräder 30, die auf den Achsen der in Fig. 2 links befindlichen Umlenkrollen 28 gehaltert sind. Die Zahnräder 30 befinden sich auf der von dem Gegenstand abgelegenen Seite der Riemen 27. Ein Auswechseln der Folienlagen 21 und/oder 22 kann unter Umständen vereinfacht werden, wenn einer der beiden als Transport-und Andrückeinrichtung arbeitenden Riemen 27 samt Umlenkrollen 28 und Andrückschienen 29 davon abgehoben bzw. entfernt wird. Vorteilhaft ist ein Drehen um eine der Achsen der Zahnräder 30, da auf diese Weise die Kopplung erhalten bleibt.

Relativ nahe am Bereich der Einführung der Folienlagen 21 und 22 zwischen die Riemen 27 befinden sich das Trenn-Schweißrad 17 und das Gegenrad 18 mit dem radial äußeren teilflexiblen Bereich 19. Es ist zu erkennen, daß die Verbindungslinie ihrer Drehachsen senkrecht zu der Ebene der Folienlagen 21 und 22 verläuft, so daß die Folie möglichst wenig aus dieser Ebene gebracht wird. Wie vorstehend bereits beschrieben, kann das Trenn-Schweißrad 17 mit einer bestimmten Andrückkraft gegen das Gegenrad 18 gedrückt werden, das vorteilhaft starr gelagert ist. Eine Vorrichtung zum Andrücken des Trenn-Schweißrades ist nicht dargestellt, kann jedoch vorteilhaft ein Federelement und einen elektromagnetischen Antrieb aufweisen. Im Berührungsbereich 32 der beiden Räder 17 und 18 ist deutlich zu erkennen, daß das Gegenrad 18 bzw. dessen teilflexibler Bereich 19 durch den anliegenden Druck des Trenn-Schweißrades 17 ein Stück eingedrückt wird.

An der von dem Gegenstand abgewandten Seite des Trenn-Schweißrades 17 ist gestrichelt eine umlaufende Heizeinrichtung 33 dargestellt, auf die weiter unten genauer eingegangen werden soll.

Die Andrückschienen 29 sind im Bereich der Räder 17 und 18 unterbrochen dargestellt, vorteilhaft verlaufen sie jedoch zu beiden Seiten der Räder, insbesondere am Berührungsbereich 32 an ihnen vorbei.

Antriebe für das Trenn-Schweißrad 17 und das Gegenrad 18 sind nicht dargestellt, jedoch auf einfache Weise nach vorbekannter Art zu realisieren. Es ist vorteilhaft, beide Räder synchron anzutreiben, insbesondere über einen gemeinsamen Antrieb, so daß kein Schlupf zwischen den beiden Folienlagen 21 und 22 entstehen kann. Auch wenn ein solcher durch die nahe an dem Berührungebereich 32 verlaufenden Riemen 27 zumindest teilweise vermieden werden könnte, sollten Verspannungen der beiden frisch verschweißten Folienlagen 21 und 22 gegeneinander möglichst vermieden werden.

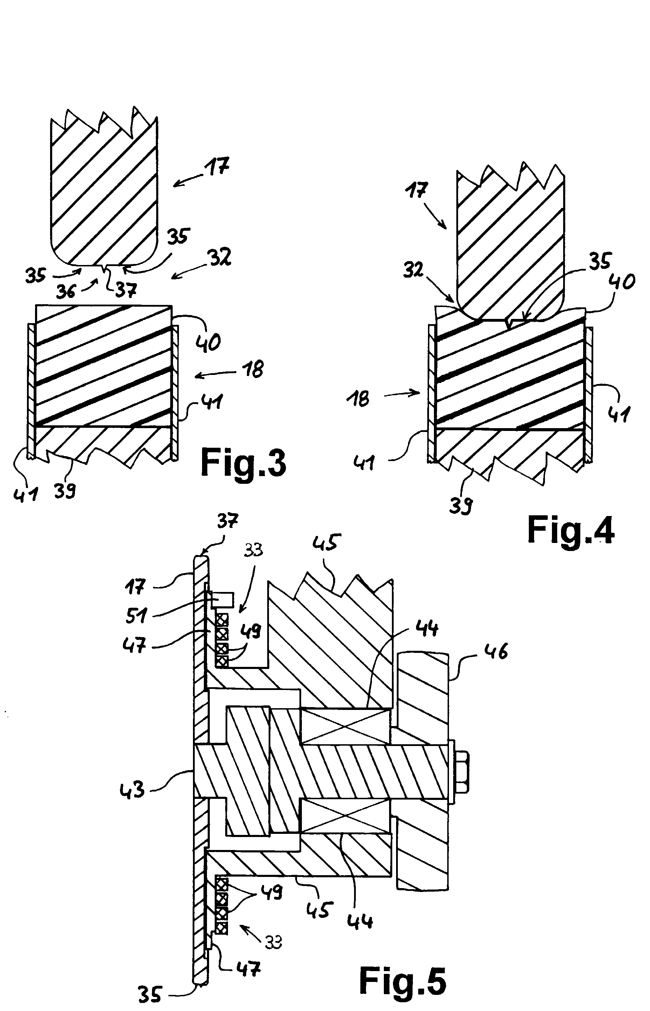

Die Fig. 3 zeigt einen Schnitt durch den Berührungsbereich 32, wobei die Schnittebene senkrecht zu der Transportrichtung T verläuft. Es ist zu erkennen, daß das Trenn-Schweißrad 17 ein Axialprofil nach Art einer geschweiften Klammer aufweist. Zwei axial verlaufende Schweißbereiche 35 schließen einen Trennbereich 36 ein, der beim Ausführungsbeispiel aus einem spitzen umlaufenden dreieckigen Vorsprung 37 besteht. Er soll eine Trennung der Folien bewirken. Die Schweißbereiche 35 gehen mit einem relativ großen Radius zu den Seiten des Trenn-Schweißrades 17 über. Der Durchmesser eines solchen Trenn-Schweißrades kann beispielsweise 120 mm betragen.

Das Gegenrad 18 weist auf einem Trägerrad 39 aus Metall einen Rundschnurring 40 mit rechteckigem Querschnitt auf, der aus teilflexiblem Material o.g. Art besteht. Der Rundschnurring 40 kann mechanisch und/oder beispielsweise durch Klebung auf dem Gegenrad 18 gehaltert sein. Seitlich übergreifen Haltescheiben 41, welche an dem Trägerrad 39 befestigt sein, den Rundschnurring 40 zum größten Teil. Sie verhindern vor allem ein axiales Abwandern des Rundschnurringes 40 von dem Trägerrad 39. Des weiteren können sie ein zu starkes Ausdehnen bzw. Flachdrücken des Rundschnurringes 40 durch das Trenn-Schweißrad 17 verhindern. Im Berührungsbereich 32 ist das Axialprofil des Rundschnurrings 40 im wesentlichen gerade, also parallel zu den Schweißbereichen 35, ausgebildet.

In Fig. 4 ist zu sehen, wie das Trenn-Schweißrad 17 im Betrieb gegen das Gegenrad 18 bzw. den Rundschnurring 40 gedrückt wird und sich dadurch in radialer Richtung in diesen eingräbt. Dargestellt ist ein Andrücken mit relativ großem Druck, wodurch das Trenn-Schweißrad 17 sowohl mit dem Trennbereich 36 als auch den beiden Schweißbereichen 35 vollständig am Außenumfang des teilflexiblen Bereichs 19 des Gegenrades 18 anliegt, insbesondere sogar mit einem Teil des abgerundeten Übergangs zu den Seitenflächen des Trenn-Schweißrades. Der Rundschnurring 40 wird komprimiert und zum Teil zur Seite verdrängt, bietet aufgrund seiner Teilflexibilität bzw. der gewählten Härte dem anliegenden Rad 17 einen ausreichenden Widerstand, um den beabsichtigten Druck auf die beiden zu verschweißenden Folienlagen 21 und 22 auszuüben. Auf eine Darstellung der Folien ist in den Figuren 3 und 4 verzichtet worden.

Fig. 5 zeigt vereinfacht und schematisch in einem Schnitt parallel zur Ebene der Folie das Trenn-Schweißrad samt Beheizung, Halterung und Antrieb. Das Trenn-Schweißrad 17 ist im wesentlichen eine flache Scheibe und sitzt auf einer Achse 43. Gelagert ist die Achse 43 durch ein Lager 44 in einem Halter 45, der zur Einstellung bzw. Verschwenkung des Trenn-Schweißrades 17 beweglich ausgebildet sein kann, falls dies vorgesehen sein sollte. Am anderen Ende der Achse 43 ist eine Antriebsscheibe 46 aufgebracht, die mit einem nicht dargestellten Antrieb verbunden sein kann, beispielsweise über Riemen. Über den Halter 45 wird der Anpreßdruck ausgeübt.

Im Bereich nahe der von dem Gegenstand abgewandten Seite des Trenn-Schweißrades 17 ist der Halter 45 flanschförmig abstehend ausgebildet, an dem Flansch 47 trägt er eine Heizeinrichtung 48 in Form von umlaufenden, spiralförmig aufgebrachten Rohrheizkörpern 49. Getrennt ist der Flansch 47 von dem Trenn-Schweißrad 17 lediglich durch einen äußerst geringen Luftspalt, so daß der Übertragungsweg für die Beheizung auf das Trenn-Schweißrad möglichst kurz und mit möglichst geringen Verlusten ausgebildet ist. In Fig. 5 ist eine besondere Ausführung des Trenn-Schweißrades 17 dargestellt, welches im Bereich des Flansches 47 eine umlaufende Ausnehmung aufweist, in welche die Heizung hineinragt. Auf diese Weise kann eine verbesserte Übertragung der Wärme von den Rohrheizkörpern 49 bzw. dem Flansch 47 auf das Trenn-Schweißrad 17 erreicht werden.

Neben der Funktion der Halterung der Rohrheizkörper 49 dient der Flansch 47 dazu, die erzeugte Wärme gleichmäßig zu verteilen und auf das Trenn-Schweißrad 17 zu übertragen. Die hohen erforderlichen Fertigungsgenauigkeiten für den schmalen Luftspalt zwischen Heizung und Radseite betreffen die Rohrheizkörper 49 nicht sie sind auch für Wartungs- und/oder Reparaturarbeiten frei zugänglich. Des weiteren ist ein Temperatursensor 51 an dem oberen äußeren Ende des Flansches 47 dargestellt, der zur Erfassung der Temperatur des Flansches 47 und damit indirekt der Temperatur des Trenn-Schweißrades 17 dient. Er kann auf nicht dargestellte Weise mit einer Steuerung für die Heizeinrichtung 48 verbunden sein, um eine exakte bzw. konstante Temperatur im gewünschten Bereich aufrecht zu erhalten. Als Steuerung kann unter anderem eine SPS-Steuerung für die Verpackungsmaschine vorgesehen sein, welche ohnehin in der Regel vorhanden ist.

In Fig. 5 ist deutlich zu erkennen, daß die Halterung des Trenn-Schweißrades 17 nicht über die dem Gegenstand zugewandte Seite bzw. den entsprechenden Schweißbereich 35 übersteht. Von dem Gegenstand wird das Rad lediglich durch einen nicht dargestellten Transport- und Andrückriemen 27 getrennt, welcher bevorzugt schmal ausgeführt sein sollte.

### FUNKTION

Die zu verpackenden Gegenstände werden auf bekannte Art und Weise zwischen die Folienlagen 21 und 22 eingebracht. Dabei bilden die Folienlagen an wenigstens einer Seite eine Art offenen Schlauch, der an dieser Stelle verschlossen werden muß. Dazu wird eine Verschweißeinrichtung 20 möglichst nahe an dem Gegenstand 12 geführt, in die die Folienlagen 21 und 22 eingebracht bzw. eingezogen werden. Durch die Vorspanneinrichtung 24 bzw. die schräg zur Transportrichtung T gestellten Vorspannräder 25 wird die Folie von dem Gegenstand weg etwas gespannt. Anschließend werden die beiden Folienlagen von den Andrück- und Transportriemen 27 erfaßt und im Bereich der Andrückschienen 29 gegeneinander gedrückt durch die Verschweißeinrichtung 20 geführt. Zwei Riemenpaare verlaufen zu beiden Seiten eines die Verschweißung und Durchtrennung der Folie bewirkenden Berührungsbereiches 32 zwischen dem Trenn-Schweißrad 17 und dem Gegenrad 18. Das beheizte Trenn-Schweißrad 17 drückt die Folienlagen mit verstärktem Druck gegen die teilflexible Oberfläche des Gegenrades 18, wobei die Folie durch Kontakt mit dem Trenn-Schweißrad erwärmt wird. Die spezielle Ausbildung des Axialprofils des Trenn-Schweißrades, beispielsweise nach Art einer geschweiften Klammer mit einem zentralen Vorsprung 37 und beidseitig angrenzenden Schweißbereichen 35, bewirkt ein Verschweißen der Folienlagen im wesentlichen auf der gesamten Breite des Trenn-Schweißrades sowie gleichzeitig eine mittige Durchtrennung bzw. Abtrennung des Folienüberstandes durch den Vorsprung. Hinter dem Berührungebereich 32 wird die Folie durch die seitlichen Riemen 27 weiterhin zusammengedrückt aus der Verschweißeinrichtung 20 herausgeführt. Auf dem relativ langen Weg können die verschweißten Folienlagen abkühlen, wobei durch die Riemenführung Belastungen bzw. Verspannungen vermieden werden können. Nach der Verschweißeinrichtung 20 ist der Folienschlauch zumindest an dieser Seite durch eine stabile Schweißnaht verschlossen und der nicht benötigte Überstand abgetrennt. Durch die Andrückung der Folienlagen gegeneinander werden Falten o. dgl. glatt gebügelt bzw. glatt gedrückt.

Eine Kühlung der Riemen 27 kann einerseits durch den Kontakt mit den Andrückschienen 29 sowie andererseits durch den freien Verlauf an der Luft erfolgen. Eine weitere Möglichkeit zur Kühlung ist Anblasen mit Luft o. dgl.

## Patentansprüche

1. Verschweißeinrichtung, insbesondere als Teil einer Verpackungsmaschine (11) zum Verpacken von Gegenständen (12), für eine durchlaufende Verpackungs-Folie (21, 22), die etwa in Form wenigstens eines Längsschlauchs Gegenstände (12) im wesentlichen überragt und/oder umhüllt und an einer Längsseite in einem mehrlagigen Bereich durch die Verschweißeinrichtung (20) verschweißbar ist, wobei die Verschweißeinrichtung (20) ein rotierendes, beheizbares Trenn-Schweißrad (17) zum Verschweißen der Folienlagen (21, 22) und zum Abtrennen eines Überstandes (23) der Folie aufweist sowie wenigstens ein an dem Trenn-Schweißrad (17) in dem Bereich (32) der Anlage an dem Gegenrad (18) anliegendes mitlaufendes Gegenrad (18) aufweist, dadurch gekennzeichnet, daß das Trenn-Schweißrad (17) hart und/oder starr ist und das Gegenrad (18) in diesem Bereich (32) teilflexibel ist.

2. Verschweißeinrichtung nach Anspruch 1, dadurch gekennzeichnet, daß das Gegenrad (18) für die Teilflexibiltät in dem Anlagebereich (32) zumindest teilweise ein teilflexibles Material (19) aufweist, insbesondere ein fluorhaltiges Material wie ein Fluorelastomer o.dgl., wobei vorzugsweise das teilflexible Material (19) eine Auflage (40) mit einer für die Teilflexibilität ausreichenden Dicke auf dem Gegenrad (18) ist.

3. Verschweißeinrichtung nach Anspruch 2, dadurch gekennzeichnet, daß das teilflexible Material (19) eine Schichtdicke im Bereich von 1 mm bis 10 mm aufweist, insbesondere ca. 5 mm.

4. Verschweißeinrichtung nach einem der vorhergehenden Ansprüche, dadurch gekennzeichnet, daß die Härte des teilflexiblen Materials (19) im Bereich zwischen 50 Shore und 150 Shore liegt, insbesondere bei ca. 75 Shore.

5. Verschweißeinrichtung nach wenigstens einem der vorhergehenden Ansprüche, dadurch gekennzeichnet, daß der teilflexible Bereich (19) des Gegenrades (18) mindestens so breit ist wie der Anlagebereich (32) an dem Trenn-Schweißrad (17), wobei sich der teilflexible Bereich (19) vorzugsweise axial über den gesamten Außenumfang des Gegenrades (18) erstreckt.

6. Verschweißeinrichtung nach wenigstens einem der vorhergehenden Ansprüche, dadurch gekennzeichnet, daß das Trenn-Schweißrad (17) im wesentlichen aus Metall ist, wobei es vorzugsweise mit einer Beschichtung gegen Haften der Folie (21, 22) versehen ist, insbesondere einer dünnen Beschichtung, wobei die Beschichtung vorzugsweise aus PTFE besteht.

7. Verschweißeinrichtung nach wenigstens einem der vorhergehenden Ansprüche, dadurch gekennzeichnet, daß das Axialprofil des Außenumfangs des Trenn-Schweißrades (17) wenigstens einen Trennbereich (36) mit einem umlaufenden Vorsprung (37), der insbesondere im wesentlichen spitz ist, und wenigstens einen Schweißbereich (35) aufweist, wobei vorzugsweise der Schweißbereich (35) breit ist im Vergleich zu dem Vorsprung (37) und direkt an den Trennbereich (36) angrenzt.

8. Verschweißeinrichtung nach Anspruch 7, dadurch gekennzeichnet, daß an beiden Seiten des Trennbereichs (36) ein Schweißbereich (35) angeordnet ist, insbesondere direkt daran angrenzend, wobei das Axialprofil des Trenn-Schweißrades (17) vorzugsweise im wesentlichen symmetrisch zu dem Vorsprung (37) des Trennbereichs (36) ist.

9. Verschweißeinrichtung nach wenigstens einem der vorhergehenden Ansprüche, dadurch gekennzeichnet, daß dem Trenn-Schweißrad (17) eine externe, insbesondere feststehende Heizeinrichtung (33) als Beheizung zugeordnet ist, wobei vorzugsweise die Heizeinrichtung (33) und ggf. ein zugehöriger Temperatursensor (51) mit einer Seite des Trenn-Schweißrades (17) überwiegend mittels Wärmestrahlung zusammen wirkt und in geringem Abstand davon angeordnet ist.

10. Verschweißeinrichtung nach wenigstens einem der vorhergehenden Ansprüche, dadurch gekennzeichnet, daß die Verschweißeinrichtung (20) eine Transporteinrichtung für die Folie (21, 22) aufweist, die die Folie zumindest vor und/oder hinter dem Trenn-Schweißrad (17) führt und/oder erfaßt, insbesondere auch im Bereich des Abtrennens, wobei sie vorzugsweise umlaufende Führungsmittel aufweist, insbesondere wenigstens zwei Riemen (27), die aneinander anliegend umlaufen und die Folie (21, 22) durch Einklemmen erfassen.

11. Verschweißeinrichtung nach Anspruch 10, dadurch gekennzeichnet, daß wenigstens zwei Riemenpaare (20) nebeneinander verlaufend angeordnet sind, die vorzugsweise jeweils an einer Seite der Längsrichtung des Abtrennens verlaufen.

12. Verschweißeinrichtung nach wenigstens einem der vorhergehenden Ansprüche, dadurch gekennzeichnet, daß eine Andrückeinrichtung (27, 29) zum Zusammendrücken der Folienlagen (21, 22) vorgesehen ist, vorzugsweise zumindest im Bereich (32) des Verschweißens der Folienlagen, wobei sich die Andrückeinrichtung (27, 29) vorzugsweise in Transportrichtung (T) über einen längeren Bereich von dem Bereich (32) des Verschweißens ausgehend erstreckt.

13. Verschweißeinrichtung nach Anspruch 12, dadurch gekennzeichnet, daß die Andrückeinrichtung zwei mit geringem Abstand zueinander verlaufende, aneinander anliegende Riemenpaare (27) aufweist, die sich in Transportrichtung (T) über einen längeren Bereich hinter und insbesondere vor dem Bereich (32) des Verschweißens erstrecken.

14. Verschweißeinrichtung nach wenigstens einem der vorhergehenden Ansprüche, dadurch gekennzeichnet, daß in Transportrichtung (T) nach dem Bereich (32) des Abtrennens des Überstandes (23) der Folie eine Separiereinrichtung für den Überstand (23) angeordnet ist, insbesondere in Verlängerung des Abtrennens, wobei die Separiereinrichtung vorzugsweise keilförmig und/oder als Klinge ausgebildet ist.
